# EUROPÄISCHE PATENTSCHRIFT

(11) **EP 2 867 123 B1**
(45) Veröffentlichungstag und Bekanntmachung des Hinweises auf die Patenterteilung: **02.08.2017**
(21) Anmeldenummer: 13729637.2
(22) Anmeldetag: 05.06.2013
(51) Int. Cl.: B65B 9/20, B65B 9/213, B65B 9/207, B65B 57/00, B65B 9/12

(54) **VERFAHREN ZUM SEPARIEREN VON PORTIONEN EINER LEBENSMITTELMASSE**
METHOD FOR SEPARATION OF PORTIONS OF FOOD MASS
PROCÉDÉ DE SÉPARATION DES PARTIES DE MASSE DES ALIMENTS

(30) Priorität: 29.06.2012 DE 102012105749
(43) Veröffentlichungstag der Anmeldung: 06.05.2015
(73) Patentinhaber: Hochland SE, 88178 Heimenkirch (DE)
(72) Erfinder: ZEUSCHNER, Roland, 88260 Argenbühl (DE); ERD, Andreas, 88171 Simmerberg (DE)
(74) Vertreter: Braun-Dullaeus Pannen Patent- und Rechtsanwälte
(86) Internationale Anmeldenummer: PCT/EP2013/061570
(87) Internationale Veröffentlichungsnummer: WO 2014/001044

(56) Entgegenhaltungen:
- WO-A1-2011/136878
- DE-A1- 19 620 560
- US-A- 6 088 994

## Beschreibung

Die Erfindung betrifft ein Verfahren und eine Vorrichtung zum Separieren von Portionen einer Lebensmittelmasse aus einem kontinuierlich entlang einer Schlauchförderstrecke mit Bandlaufgeschwindigkeit herangeführten und mit der Lebensmittelmasse, insbesondere mit Schmelzkäse, gefüllten Folienschlauch, wobei der mit der Lebensmittelmasse gefüllte Folienschlauch zunächst mittels eines Paares von Kalibrierungswalzen zu einem Band definierter Stärke geformt wird und wobei zur Bildung separierter Lebensmittelportionen die Lebensmittelmasse nachfolgend mittels eines Paares aufeinander wirkender Verdrängungswalzen aus quer über den Folienschlauch verlaufenden Verdrängungsbereichen verdrängt wird. In den Verdrängungsbereichen wird nachfolgend eine Quersiegelung zum Verschließen der Einzelscheiben vorgenommen. Letztendlich werden die Einzelscheiben aus der Kette durch Schnitte in der Quersiegelung getrennt.

Solche Verfahren sind aus der Herstellung einzeln verpackter Schmelzkäsescheiben ("IWS", "individual wrapped slices") seit langem bekannt und beispielsweise in der DE 42 04 357 A1 und dem US 5.112,632 beschrieben. Dabei wird zunächst aus einer Folie ein Folienschlauch geformt und an der Längsnaht versiegelt. Dieser Folienschlauch wird mit der Lebensmittelmasse befüllt und zunächst zu einem Band gewalzt. Je nach dem, wird die Lebensmittelmasse im noch heißen Zustand ("heißverdrängen") oder im gekühlten Zustand ("kaltverdrängen") durch Verdrängung in einzelne Portionen separiert. Die Verdrängungsbereiche werden später mit einem Quersiegelwerkzeug dichtend verschlossen und letztendlich zu Einzelportionen geschnitten.

Das Verdrängungswerkzeug hat entweder zwei Verdrängungsriemen, die sich bei der Produktschlauchberührung im Gleichlauf bewegen, oder mehrere Verdrängerwalzen, wobei Verdrängungsriemen oder Verdrängerwalzen ihrerseits mit Verdrängungsstegen versehen sind, über die der Verdrängungsdruck auf den gefüllten Schlauch gebracht wird. Die Verdrängungsstege wälzen sich beim Verdrängen auf dem Folienschlauch ab. Bekanntermaßen werden die Verdrängungswerkzeuge mit einer konstanten und vor allem durch mechanische Kopplung mit der Bandlaufgeschwindigkeit synchronisierten Umfangsgeschwindigkeit betrieben. Dementsprechend muss die Geometrie des Verdrängerwerkzeugs und der Verdrängungsstege im Hinblick auf die Größe der herzustellenden Lebensmittelscheiben angepasst werden.

Bei den bekannten Verdrängungswerkzeugen legt der Abstand der Verdrängungsstege den Abstand der Verdrängungsbereiche fest. Bei diesen Vorrichtungen ist es daher nicht oder nur mit hohem Umbauaufwand möglich, die Scheibengröße in Käseband-Laufrichtung zu verändern oder sich spontan auf Veränderungen in den Fertigungsparametern einzustellen. In der festen Korrelation von Bandlaufgeschwindigkeit und Querverdrängung ist es auch nur auf mechanischem Wege möglich, auf prozessbedingte Änderungen, beispielsweise auf eine Längung der Folie, zu reagieren. Eine solche mechanische Justierung ist jedoch aufwendig und keinesfalls flexibel.

Eine solche Vorrichtung ist beispielsweise auch in der DE 196 20 560 offenbart. Auch hier ist die Größe der Scheiben durch eine Verdrängerstation mit auf einem Riemen fest beabstandeten Verdrängungsstegen vorgegeben. Durch die festgelegte Beabstandung der Verdrängungsbereiche ist eine Korrelation aller nachfolgenden Walzen, die mit in die Verdrängungsbereiche eingreifenden Werkzeugen bestickt sind, mit der Bandgeschwindigkeit unabdingbar.

Insofern ist es Aufgabe der vorliegenden Erfindung, ein Verfahren zum Portionen einer Lebensmittelmasse in einem kontinuierlich entlang einer Schlauchförderstrecke herangeführten und mit Lebensmittelmasse gefüllten Folienschlauch bereitzustellen, das bei einfachem Aufbau eine hohe Flexibilität beim Anfertigen der Querverdrängungszone und entsprechend der Quersiegelung bietet. Zudem ist es Aufgabe, eine einfach und kostengünstig aufgebaute Vorrichtung zum Umsetzen des Verfahrens zu schaffen, die mit demselben Verdrängerwerkzeug unterschiedlich beabstandete Verdrängungsbereiche und somit veränderliche Packungsgrößen herstellen kann.

Diese Aufgaben werden durch das Verfahren nach Anspruch 1 und die Vorrichtung nach Anspruch 9 gelöst. Besondere Ausführungsformen der Erfindung sind in den jeweiligen Unteransprüchen genannt.

Ein wesentlicher Grundgedanke der Erfindung liegt zunächst in der Entkopplung des Querverdrängungs- und des Quersiegelvorgangs von der Bandlaufgeschwindigkeit. Das wird erfindungsgemäß dadurch erreicht, dass die Verdrängungswalzen, die in einer vorteilhaften Ausführungsform auch die Quersiegelung vornehmen, entkoppelt von der Bandlaufgeschwindigkeit und damit in beliebigem funktionellen Zusammenhang mit dieser mittels eines in ihrem Lauf, insbesondere in Drehwinkel und Drehgeschwindigkeit, steuerbaren Antriebs angetrieben wird. Ein solcher Antrieb kann durch Schrittmotoren oder durch Servomotoren realisiert werden. Während beim Schrittmotor das Feld schrittweise rotiert und die Welle entsprechend in definierten Einzelschritten bewegt, wird die Lage, die Geschwindigkeit und/oder das Drehmoment beim Servoantrieb mit einem geschlossenen Regelkreis kontrolliert. Die Erfindung macht es sich zunutze, dass mit solchen Motoren einerseits unabhängig von äußeren Faktoren beliebige Bewegungsprofile eingestellt werden können, dass aber andererseits das Bewegungsprofil auch in beliebige Abhängigkeiten von äußeren Parametern, die insbesondere von Sensoren herrühren, gesetzt werden kann. Dadurch, dass eine Entkopplung des Querverdrängungs- respektive des Quersiegelvorgangs stattfindet, lassen sich diese Schritte im Verhältnis zur vorteilhafterweise kontinuierlichen Bandlaufgeschwindigkeit beliebig einstellen. Dabei ist natürlich darauf zu achten, dass die Querverdrängung und die Quersiegelung insofern korrelieren, als in den Verdrängungsbereichen auch gesiegelt werden muss, was im einfachsten Fall durch eine Kombination von Querverdrängungs- und Quersiegelwalze quasi gleichzeitig geschehen kann.

An dieser Stelle sei zunächst hervorgehoben, dass unter das Merkmal "Walze" nachfolgend auch Walzen fallen, über die ein Riemen geführt wird. Eine Verdrängungswalze kann daher auch von einer glatten Walze gebildet sein, über die ein Riemen mit Verdrängungsstegen geführt wird. Entscheidend ist jedoch, dass immer nur ein einziges Paar von Verdrängungsstegen im Eingriff mit dem mit der Lebensmittelmasse gefüllten Folienschlauch ist, so dass sich der Abstand zwischen den aufeinanderfolgenden Verdrängungsbereichen beliebig einstellen lässt. Es könnten auch mehrere, hintereinander angeordneter Walzenpaare zur Verdrängung eingesetzt werden.

Mit derartigen Antrieben ist es einerseits möglich, die Verdrängungswalzen in einer einstellbaren aber während der Produktion einer Charge festen Abhängigkeit von der Bandlaufgeschwindigkeit oder mit einer vorgegebenen individuellen Rotationscharakteristik zu betreiben. Mit Einsatz dieser Antriebe kann beispielsweise zur Anfertigung unterschiedlich dimensionierter Scheiben jede Charge mit einem anderen Bewegungsprofil gefahren werden; es können sogar im Laufe einer Charge verschieden dimensionierte Scheiben gefertigt werden. Die Dimensionen der anzufertigenden Scheiben kann im Prinzip mit solchen Antrieben völlig flexibel im Vorhinein programmiert werden, so dass die Steuerung des Walzenantriebs und damit das Setzen der Verdrängungsstege durch ein Programm vorgenommen wird. Im einfachsten Fall wird das Setzen der Verdrängungsstege durch eine vom Programm vorgegebene Zeitspanne, die einstellbar ist, definiert, so dass die Verdrängungswalzen vermittels eines eine Zeittaktung realisierenden Computerprogramms mit vorgebbarer Rotationscharakteristik angesteuert werden.

Statt durch eine solche Zeitspanne kann das Setzen der Verdrängungsstege auch unter Kontrolle von Sensoren geschehen, die den Fortlauf des Folienschlauches überwachen. Damit und mittels des separaten Antriebs ist es insbesondere möglich, die Verdrängungswalzen in Korrelation mit einem an dem Folienschlauch erkennbaren Muster zu betreiben, die Verdrängung also mit dem tatsächlichen Bandvorlauf zu korrelieren. Das Muster kann wie eine Rapportmarke extra zum Erkennen und Synchronisieren auf die Folie aufgedruckt sein. Es kann sich aber auch um eine markante Stelle in einem aufgedruckten Bild einer Reihe immer wiederkehrender Bilder handeln, auf die synchronisiert wird. Auch kann auf optisch oder taktil erkennbare und immer wiederkehrende Ausnehmungen oder Einprägungen in der Folie synchronisiert werden. In diesem Ausführungsbeispiel werden die Verdrängungswalzen vermittels eines Computerprogramms in Korrelation zu einem Sensorsignal angesteuert, wobei das Sensorsignal in Korrelation mit einem an dem Folienschlauch erkennbaren Muster steht.

Die Synchronisation auf eine solche "Marke" umfasst dann die folgenden Verfahrensschritte: Erkennen eines definierten Teils eines aufgedruckten und/oder eingeprägten Musters, insbesondere einer optisch und/oder taktil erkennbaren Rapportmarke, auf dem Folienschlauch anhand eines Sensors, der insbesondere als optischer und/oder taktiler Sensor ausgebildet sein kann; Betreiben des Verdrängungswalzen(-Paares) in Abhängigkeit der Erkennung des definierten Teils des aufgedruckten Musters, so dass die Lebensmittelmasse in einem vorbestimmten Abstand zum definierten Teil des aufgedruckten Musters aus dem Schlauch verdrängt wird. Die Verdrängung und die nachfolgende Siegelung wird erfindungsgemäß auf die Folienbedruckung oder -einprägung, insbesondere auf die Rapportmarke synchronisiert und rapportzentriert in die Packungszwischenräume eingefügt.

Der Gedanke liegt somit darin, dass die Funktion und die Tätigkeit der Verdrängungswalzen und damit das Verdrängen der Lebensmittelmasse selbst in Abhängigkeit dessen gebracht wird, was durch den Sensor erkannt wird. So erkennt der Sensor das Muster auf dem Folienschlauch, das in einem zuvor festgelegten Abstand zu dem Verdrängungsbereich liegt. Anhand des Zeitpunkts und des Ortes der Rapportmarke bei der Erkennung durch den Sensor und anhand der Fördergeschwindigkeit des Folienschlauches kann nun ermittelt werden, zu welchem Zeitpunkt der Bereich des Folienschlauches, an dem eine Verdrängung statt finden soll (der Verdrängungsbereich), in den Wirkbereich des Verdrängungswerkzeugs gelangt. Die Verdrängungswalzen werden dann so eingestellt, dass genau zu diesem Zeitpunkt (dem Verdrängungszeitpunkt) die Verdrängung auch erfolgt. Die Verdrängungswalzen können insbesondere durch einen (Schritt- oder) Servomotor angetrieben werden, der exakt zum Verdrängungszeitpunkt die Verdrängungswalzen in eine entsprechende Stellung bringen kann. Zum Verdrängungszeitpunkt kann durch den (?)Schrittmotor auch sichergestellt werden, dass die Umfangs-Geschwindigkeit der Verdrängungswalzen der Fördergeschwindigkeit des Schlauchs entspricht. Im Zeitraum zwischen zwei nachfolgenden Verdrängungszeitpunkten können die Verdrängungswalzen auf eine höhere oder niedrigere Umfangs-Geschwindigkeit gebracht werden, um Unterschiede zwischen dem Abstand zweier nachfolgender Verdrängungsbereiche und zweier nachfolgender Verdrängungsoberflächen auszugleichen.

Ferner kann vorgesehen sein, dass anhand der vorbeschrieben Wechselwirkung, dass die Funktion der Verdrängungswalzen zumindest mittelbar in Abhängigkeit zu einem Schnittmuster an der Längskante der Folie, die den Schlauch bildet, gebracht wird. Das Schnittmuster kann Aufreißlaschen an der fertigen Verpackung bilden. Die Aufreißlaschen sollen natürlich zentriert sein auf eine Käsescheibe bzw. auf die exakte Verpackung einer Käsescheibe, was durch das Verfahren erreicht werden kann. Die Synchronisation mit der Gestalt der Folie kann auch anhand von Mustern erfolgen, die nicht aufgedruckt sind, was ferner für die gesamte Erfindung zutrifft. So kann das Muster auch durch eine Werkstückkante, z.B. eine Ecke des Schnittmusters o.ä. gebildet sein.

Die Erfindung umfasst ferner eine Vorrichtung zum Separieren von Portionen eines Lebensmittels aus einem kontinuierlich entlang einer Schlauchförderstrecke herangeführten und mit einer Lebensmittelmasse, insbesondere mit heißem aufgeschmolzenem Käse, gefüllten Folienschlauch, wobei zur Bildung separierter Lebensmittelportionen Verdrängungswalzen zur Verdrängung der Lebensmittelmasse aus einem Verdrängungsbereich und vorhanden sind. Erfindungsgemäß hat die Vorrichtung einen in seinem Lauf steuerbaren Antrieb, insbesondere einen Schrittmotor oder einen Servoantrieb, der einen von der Bandlaufgeschwindigkeit entkoppelten und mit einer Zeittaktung und/oder einem Sensorsignal korrelierenden Antriebs der Verdrängungswalzen ermöglicht.

in einer besonders vorteilhaften Ausführungsform der Erfindung sind Mittel zum Führen des Folienschlauches entlang der Schlauchförderstrecke und ein Sensor zum Erkennen eines definierten Teils eines aufgeprägten oder aufgedruckten Musters, insbesondere einer Rapportmarke, auf dem Folienschlauch oder einer Ausnehmung in dem Folienschlauch vorgesehen. Die Ansteuerung der Verdrängungswalzen wird durch eine Steuerung bewältigt, die in Abhängigkeit eines von dem Sensor erzeugten Signals die Verdrängungswalzen ansteuert, so dass die Lebensmittelmasse in einem vorbestimmten Abstand zum definierten Teil des aufgedruckten Musters oder der Ausnehmung aus dem Folienschlauch verdrängt wird.

Die Erfindung wird nachfolgend anhand näher erläutert, hierin zeigt
- **Figur 1**: schematisch eine Vorrichtung zum Durchführen des erfindungsgemäßen Verfahren
a) in Draufsicht ohne Darstellung von Werkzeugen,
b) in Seitenansicht;
- **Figur 2**: den Geschwindigkeitsverlauf einer Verdrängwalze jeweils für den Fall, dass
a) der Abstand zweier Verdrängungsoberflächen gleich dem Abstand zweier Verdrängungsbereiche ist,
b) der Abstand zweier Verdrängungsoberflächen am Umfang der Verdrängungswalze größer ist als der Abstand zweier Verdrängungsbereiche an dem Schlauch,
c) der Abstand zweier Verdrängungsoberflächen am Umfang der Verdrängungswalze kleiner ist als der Abstand zweier Verdrängungsbereiche an dem Schlauch;

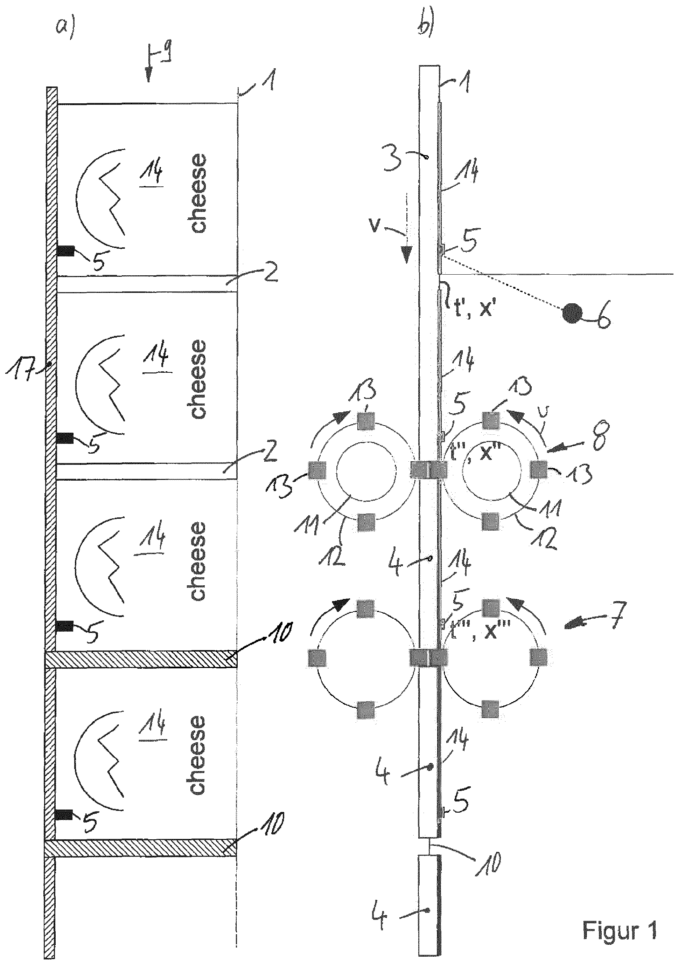

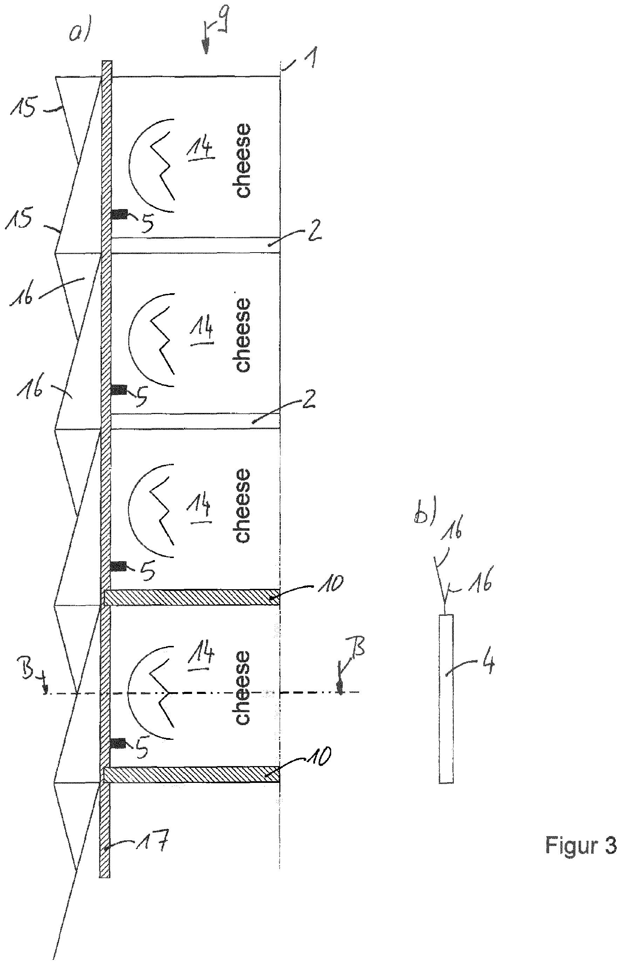

- **Figur 3**: a) die Vorrichtung nach Figur 1a) mit einer Produktfolie mit ein- oder beidseitigem Konturschnitt an der Folienlängsseite,
b) eine erzeugte Verpackung mit Aufreißlaschen im Querschnitt nach der Schnittlinie B-B nach Figur 3a).

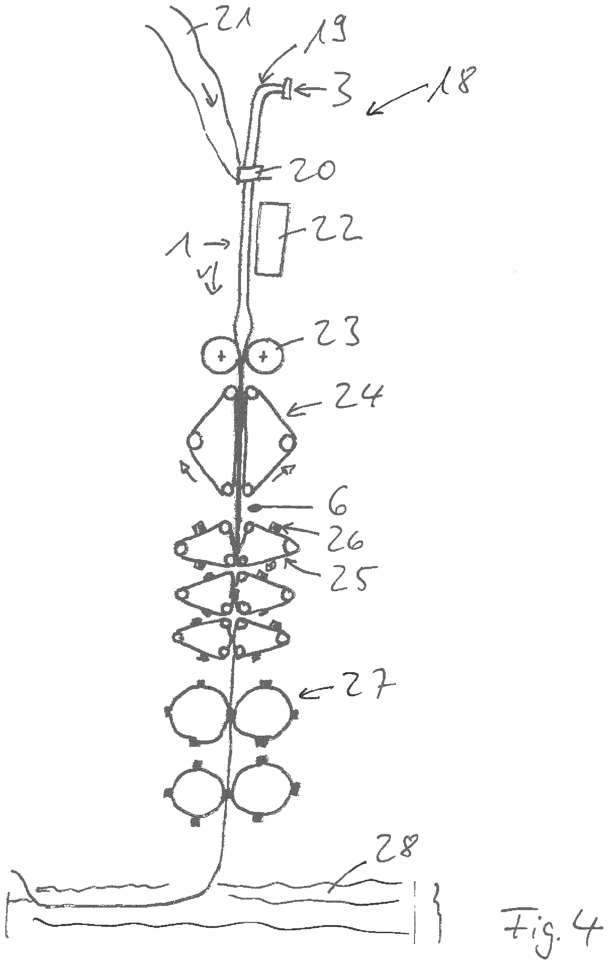

- **Figur 4**: eine Produktionseinrichtung mit einer Vorrichtung zum Durchführen des erfindungsgemäßen Verfahren.

In Figur 1 ist ein Folienschlauch 1 während des erfindungsgemäßen Verfahrens gezeigt. Der Folienschlauch 1 wird entlang einer Schlauchförderstrecke 9 durch nicht dargestellte Führungsmittel geführt. Er ist mit einer Schmelzkäsemasse 3 gefüllt, wobei die im Folienschlauch verpackte Schmelzkäsemasse zu einzeln verpackten Scheiben separiert wird. Am Ende des Verfahrens stehen einzeln verpackte Käsescheiben einer bestimmten Größe, wobei die Länge der Scheiben durch die erfindungsgemäße Vorrichtung beliebig (sogar während des laufenden Betriebs) einstellbar ist, die Breite jedoch durch den Folienschlauch vorgegeben ist. Im vorliegenden Ausführungsbeispiel ist jede Verpackung mit einer exakt auf die Verpackung zentrierten Abbildung 14 versehen, welche ein Logo und Produktinformationen in Textform umfasst.

Jede Abbildung 14 verfügt über eine Rapportmarke 5, welche durch einen Sensor 6 erkannt wird. In einem definierten Abstand zu der Rapportmarke 5 ist wird ein Verdrängungsbereich 2 definiert, an dem Verdrängerwalzen 8, 12 ansetzen, um den Schmelzkäse aus dem Verdrängungsbereich 2 zu verdrängen. Wenn der Sensor 6 die Rapportmarke 5 erkennt, befindet sich zum Zeitpunkt t' der Erkennung der Verdrängungsbereich 2 an einem Ort x'. Aufgrund der konstanten Fördergeschwindigkeit v des Schlauches 1 kann dann ein Verdrängungszeitpunkt t" errechnet werden, an dem der Verdrängungsbereich 2 an einem Ort x" entlang der Förderstrecke 9 angeordnet ist, an dem dann ein Verdrängen durch die Verdrängerwalzen 12 erfolgt. Dabei werden durch Rotation die Verdrängungsoberflächen 13 auf den Verdrängerwalzen 12 aufeinander zu bewegt und quetschen den Folienschlauch 1 dort ein, wodurch der Schmelzkäse 3 aus dem Verdrängungsbereich 2 heraus verdrängt werden soll. Dadurch wird der Schmelzkäse 2 dann zu einzelnen Käsescheiben 4 portioniert.

Anschließend wird der Schlauch 1 durch ein Quersigelwerkzeug 7 mit Quersiegelwalzen im Bereich des Verdrängungsbereichs 2 versiegelt. Später können die einzelnen Scheiben durch ein Querschneiden in den gesiegelten Bereiche 2 getrennt werden, beispielsweise durch eine Vorrichtung, wie sie in der WO 2008/119633 A1 beschrieben ist.

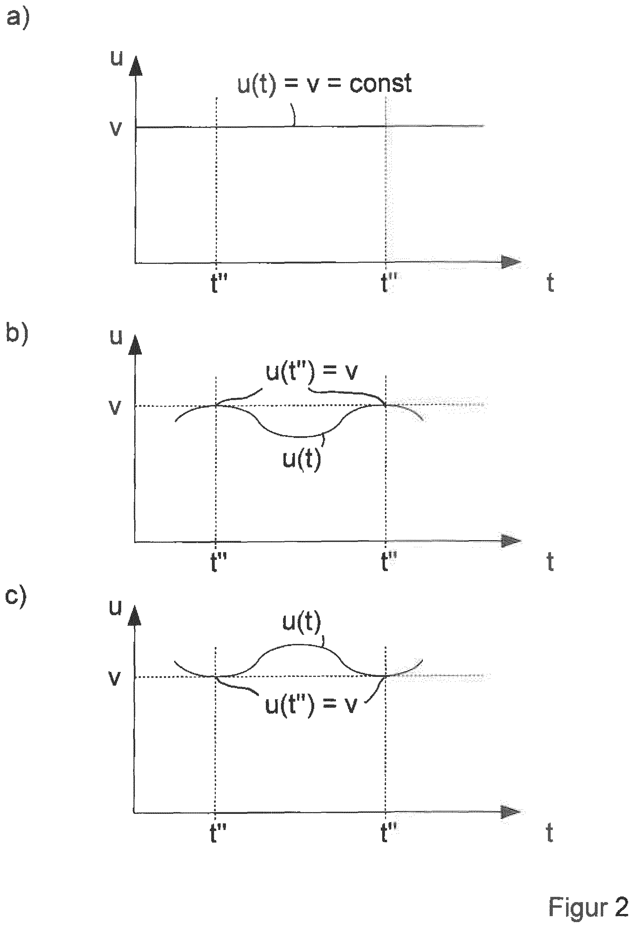

Dabei ist es erforderlich, dass zum Zeitpunkt t" am Ort x" die Verdrängungsoberflächen 13 mit einer Umfangsgeschwindigkeit u bewegt werden, die der Fördergeschwindigkeit v des Schlauches 1 entsprechen. In Figur 2a ist ein Geschwindigkeitsdiagramm dargestellt, bei dem die Umfangsgeschwindigkeit u der Verdrängungsoberflächen 13 identisch ist zur Fördergeschwindigkeit v. Dies ist dann möglich, wenn die Verdrängungsbereiche 2 des Schlauchs 1 einen Abstand zueinander aufweisen, der dem Umfangsabstand zweier benachbarten Verdrängungsoberflächen 13 entspricht. Dann kann ohne Gleiten ein Abwälzen der Verdrängungsoberflächen 13 auf dem Schlauch bei konstanter Umfangsgeschwindigkeit erfolgen. Es ist nämlich von einer konstanten Fördergeschwindigkeit v des Schlauches 1 auszugehen.

Sollte hingegen der Abstand zweier benachbarter Verdrängungsbereiche 2 größer sein als der Umfangsabstand zweier benachbarter Verdrängungsoberflächen 13, so muss die Geschwindigkeit der Verdrängwalze 12 zwischen den einzelnen Verdrängungsschritten verringert werden, um ein "Überrunden" der Verdrängungsbereiche 2 durch die Verdrängungsoberflächen 13 zu verhindern. Jedoch ist es weiterhin vorgesehen, dass während des Verdrängungszeitpunkts t" die Umfangsgeschwindigkeit u der Verdrängungswalze 12 weiterhin der Fördergeschwindigkeit v des Schlauches 1 entspricht, um eine Gleiten des Werkzeugs 12 auf dem Schlauch zu 1 verhindern. Daher ergibt sich der in Figur 2b gezeigte wellenförmige Verlauf, der im Mittel jedoch geringer ist als die Fördergeschwindigkeit des Schlauches 1 und durch die Ansteuerung des Servomotors 11 realisiert wird.

Für den Fall, dass der Abstand zweier benachbarter Verdrängungsbereiche 2 kleiner ist als der Umfangsabstand zweier benachbarter Verdrängungsoberflächen 13, so muss die Geschwindigkeit der Verdrängwalze 12 zwischen den einzelnen Verdrängungsschritten erhöht werden, um umgekehrt ein "Überrunden" der Verdrängungsoberflächen 13 durch die Verdrängungsbereiche 2 zu verhindern. Auch in diesem Fall ist es weiterhin vorgesehen, dass während des Verdrängungszeitpunkts t" die Umfangsgeschwindigkeit u der Verdrängungswalze 12 weiterhin der Fördergeschwindigkeit v des Schlauches 1 entspricht, um ein Gleiten des Werkzeugs 12 auf dem Schlauch zu 1 verhindern. Daher ergibt sich der in Figur 2c gezeigte wellenförmige Verlauf, der im Mittel jedoch größer ist als die Fördergeschwindigkeit des Schlauches 1 und durch die Ansteuerung des Servomotors 11 realisiert wird. Eine entsprechende Ansteuerung erfahren die nachfolgenden Siegelwalzen 27 (Figur 4) mit einem entsprechend anderem Zeitpunkt t"' und einem anderem Ort x"'

Durch die Erfindung wird es nun möglich, dass flexibel beliebige Abstände von Verdrängungsbereichen 2 realisiert werden können, ohne dass dafür die Vorrichtung zum Verdrängen umgerüstet werden muss. Es ist dafür lediglich entweder eine einstellbare Zeittaktung der Verdrängung und Siegelung erforderlich oder am Schlauch wird eine von einem Sensor erkennbare Rapportmarke 5 identifiziert, die stets im vorbestimmten Abstand zum gewünschten Verdrängungsbereich angeordnet ist. So kann während des laufenden Betriebes auch ohne weiteres allein durch Veränderung der Zeittaktung und/oder der Rapportmarkenabstände auf andere Abstände der Verdrängungsbereiche 2 gewechselt werden. Damit wird eine sichere Synchronisation der Verdrängungswalzen 8 insbesondere zu dem auf dem Schlauch aufgedruckten Bild oder anderer Markierungen erreicht. Hierdurch wird es erst ermöglicht, dass Verpackungen mit genau einer Schmelzkäsescheibe mit einem auf die Verpackung zentrierten Bild versehen werden.

Anhand der Figur 3 wird eine weitere Anwendungsmöglichkeit erläutert. Die den Schlauch 1 bildende Folie weist an einer oder beiden Längskanten jeweils ein gezacktes Muster 15 auf. Beim erzeugten Schlauch 1 überragt das Zackenmuster 15 dann die Längssiegelnaht 17, so dass Aufreißlaschen 16 über die Längssiegelnaht 17 herausragen. Die Aufreißlaschen 16 liegen frei und können einzeln vom Endverbraucher gegriffen und zum Öffnen der Verpackung auseinandergezogen werden. Die Rapportmarke 5 ist mit dem Zackenmuster 15 synchronisiert. Durch die Synchronisation der Verdrängungswalzen 8 mit der Rapportmarke 5 wird somit eine Käsescheibe 4 aus der Schmelzkäsemasse 3 separiert, die an dem Zackenmuster 15 und damit an den Aufreißlaschen 16 ausgerichtet ist. Die Verdrängerwalzen 8 sowie das Quersiegelwerkzeug 7 müssen nicht über die gesamte Folienbreite wirken, sondern können den Bereich der Aufreißlaschen 16 ausnehmen.

In Figur 4 ist eine Produktionslinie 18 zum Herstellen von einzeln verpackten Käsescheiben schematisch dargestellt, die zur Vorrichtung des erfindungsgemäßen Verfahrens geeignet ist. Durch einen Zuführstutzen 19 im oberen Bereich wird aufgeschmolzener fließfähiger Schmelzkäse 3 zugeführt. An einem Formansatz 20 wird Schlauchfolie 21, die zunächst noch flach herangeführt wird, U-förmig um dem Zuführstutzen 19 herumgelegt. In einer nachfolgenden Längssiegeleinheit 22 werden dann die Längskanten der Schlauchfolie, die aufgrund der V-förmigen Anordnung aufeinander zum Liegen kommen, gesiegelt, so dass die kontinuierliche Längssiegelkante 17 (Figur 1a) erzeugt wird. Hierdurch entsteht dann der Folienschlauch 1.

Nachfolgend passiert der mit Schmelzkäse 3 gefüllte Folienschlauch 1 zwei gegenläufige Kalibrierungswalzen 23, mit denen die Scheibendicke der Schmelzkäsescheiben 4 eingestellt wird. Zwei nachfolgende Förderbänder 24 spannen den gefüllten Folienschlauch 1 zwischen sich ein. Durch eine Zugkraft, die die Förderbänder 24 auf den Folienschlauch aufbringen, wird dieser im Bereich oberhalb der Förderbänder 24 straff gehalten und weiter nach unten gefördert. In einer anderen Ausführungsform können die Förderbänder 24 auch unterhalb der Verdräng- und Siegelwerkzeuge angebracht sein. Die Förderbänder 24 sorgen dafür, dass der Folienschlauch 1 auf eine gewünschte Fördergeschwindigkeit gebracht wird, was Vorrausetzung für die Funktion der Verdrängerwalzen erforderlich ist. Ein optischer Sensor 6 erkennt die Rapportmarken oder andere Muster auf dem Folienschlauch 1

Den Förderbändern 24 nachfolgend sind die Verdrängerwalzen vorgesehen. Diese sind in diesem Fall abweichend zum Ausführungsbeispiel nach Figur 1 als drei nacheinander angeordnete Paare von Stegriemenbändern 25 ausgebildet, die mit quer zur Förderrichtung ausgerichteten Stegen 26 versehen sind. Die Stege 26 bilden die Verdrängungsoberflächen 9 analog zu den Verdrängerwalzen 12 nach Figur 1 aus und können ebenso Schmelzkäsemasse 3 aus Bereichen des Schlauchs 1 verdrängen. Die Stege 26 werden während des Verdrängens mit der Umfangsgeschwindigkeit u betrieben, die der Fördergeschwindigkeit v des Schlauchs entspricht. In Förderrichtung nachfolgend sind zwei Paare von Quersiegelwalzen 27 vorgesehen, die die Schlauchfolie in den Verdrängungsbereichen 2 quersiegeln. Die Funktion der Stegriemenbänder 25 und der Quersiegelwalzen 27 ist analog zur Funktion der entsprechenden Elemente aus dem Ausführungsbeispiel nach Figur 1 und Figur 2. Anschließend durchläuft der Schlauch 1 ein Kühlwasserbad 28, wodurch die nunmehr entstandenen Schmelzkäse Einzelscheiben gekühlt werden.

Durch den Einsatz der rapportzentrierten (oder Zentrierung auf eine andere Markierung) Verdrängung und Siegelung werden beide Verfahrensschritte auf eine bedruckte und/oder geprägte Oberfläche synchronisiert. So kann die Verdrängung und auch die Quersiegelung zentrisch zwischen die Bildaufdrucke platziert werden. Durch den erfindungsgemäßen Antrieb der Verdränger- und Quersiegelwerkzeuge ist damit eine Synchronisation auf das Foliendruckbild möglich. Ferner kann durch den Antrieb auch während des Betriebs auf beliebigen Scheibenlängen innerhalb eines vorgegeben Bereichs ohne Wechsel von Werkzeugen umgestellt werden, was sich insbesondere für unbedruckte oder mit Streudruck bedruckte Folien eignet. In die Produktionseinrichtung nach Figur 4 kann ohne weiteres die Vorrichtung nach Figur 1 als Ersatz von entsprechenden in Figur 4 gezeigten Einheiten eingefügt werden.

### Bezugszeichenliste

- 1: Schlauch
- 2: Verdrängungsbereich
- 3: Schmelzkäse
- 4: Käsescheibe
- 5: Rapportmarke
- 6: Sensor
- 7: Quersiegelwerkzeug
- 8: Verdrängerwerkzeug
- 9: Schlauchförderstrecke
- 10: Quersiegelnaht
- 11: Schrittmotor
- 12: Verdrängerwalze
- 13: Verdrängungsoberfläche
- 14: Bild
- 15: Zackenmuster
- 16: Aufreißlasche
- 17: Längssiegelnaht
- 18: Produktionsmaschine
- 19: Zuführstutzen
- 20: Formansatz
- 21: Schlauchfolie
- 22: Längssiegeleinheit
- 23: Walzen zur Kalibrierung
- 24: Förderbänder
- 25: Stegriemenbänder
- 26: Stege
- 27: Quersiegelwalzen
- 28: Kühlwasserbad

- x: Position entlang der Schlauchförderstrecke
- t: Zeitpunkt
- v: Fördergeschwindigkeit des Schlauchs
- u: Umfangsgeschwindigkeit der Verdrängungsoberflächen

## Patentansprüche

1. Verfahren zum Separieren von Portionen einer Lebensmittelmasse (3) aus einem entlang einer Schlauchförderstrecke (9) mit kontinuierlicher Bandlaufgeschwindigkeit herangeführten und mit der Lebensmittelmasse, insbesondere mit Schmelzkäse (3), gefüllten Folienschlauch (1), wobei der mit der Lebensmittelmasse (2) gefüllte Folienschlauch zunächst mittels einem Paar von Kalibrierungswalzen zu einem Band definierter Stärke geformt wird und wobei zur Bildung separierter Lebensmittelportionen (3) die Lebensmittelmasse nachfolgend mittels eines Paares von Verdrängungswalzen mit aufeinander wirkenden Verdrängungsstegen (26) aus quer über den Folienschlauch verlaufenden Verdrängungsbereichen (2) verdrängt wird,
**dadurch gekennzeichnet,**
**dass** die Verdrängungswalzen mittels eines in seinem Lauf steuerbaren Antriebs mit einer vorgegebenen individuellen Rotationscharakteristik entkoppelt von der Bandlaufgeschwindigkeit angetrieben werden.

2. Verfahren nach Anspruch 1,
**dadurch gekennzeichnet,**
**dass** die Verdrängungswalzen vermittels eines eine Zeittaktung realisierenden Computerprogramms mit vorgebbarer Rotationscharakteristik angesteuert werden.

3. Verfahren nach Anspruch 1,
**dadurch gekennzeichnet,**
**dass** die Verdrängungswalzen vermittels eines Computerprogramms in Korrelation zu einem Sensorsignal angesteuert werden, wobei das Sensorsignal in Korrelation mit einem an dem Folienschlauch erkennbaren Muster steht.

4. Verfahren nach Anspruch 3,
**gekennzeichnet durch,**
die folgenden Verfahrensschritte:
Erkennen eines definierten Teils (5) eines auf dem Folienschlauch (1) vorgesehenen Musters, insbesondere einer Rapportmarke, mittels eines Sensors (6),
Betreiben der Verdrängungswalzen (8) in Abhängigkeit der Erkennung des definierten Teils (5) des Musters, so dass die Lebensmittelmasse (2) in einem vorbestimmten Abstand zum definierten Teil (5) des Musters in einem Verdrängungsbereich aus dem Folienschlauch (1) verdrängt wird,

5. Verfahren nach dem vorherigen Anspruch,
**dadurch gekennzeichnet,**
**dass** anhand der Position (x') des definierten Teils (5) entlang der Schlauchförderstrecke (9) und anhand des Zeitpunktes (t') der Erkennung der Markierung (5) ein Verdrängungszeitpunkt (t") ermittelt wird, zu dem die die Verdrängungswalzen (8) mit ihren Verdrängungsstegen in verdrängenden Kontakt mit dem Schlauch (1) gebracht werden.

6. Verfahren nach einem der vorherigen Ansprüche,
**dadurch gekennzeichnet,**
**dass** im Verdrängungsbereich (2) eine Quersiegelnaht (10) erzeugt wird, nachdem die Lebensmittelmasse (3) aus dem Verdrängungsbereich (2) verdrängt wurde.

7. Verfahren nach einem der vorherigen Ansprüche,
**dadurch gekennzeichnet,**
**dass** ein Konturschnitt (15) an einer Längskante (17) einer den Folienschlauch (1) bildenden Folie zur Bildung von Aufreißlaschen (16) an der fertigen Verpackung zumindest mittelbar auf die Verdrängungswalzen (7) und/oder auf Quersiegelwalzen synchronisiert wird.

8. Vorrichtung zum Separieren von Portionen eines Lebensmittels (3) aus einem entlang einer Schlauchförderstrecke (9) mit kontinuierlicher Bandlaufgeschwindigkeit herangeführten und mit einer Lebensmittelmasse, insbesondere mit Schmelzkäse (3), gefüllten Folienschlauch (1), wobei zur Bildung separierter Lebensmittelportionen Verdrängungswalzen (7) zur Verdrängung der Lebensmittelmasse (3) aus einem Verdrängungsbereich (2) vorhanden sind,
**dadurch gekennzeichnet,**
**dass** ein in seinem Lauf steuerbaren Antrieb mit einer vorgegebenen individuellen Rotationscharakteristik vorgesehen ist, um die Verdrängungswalzen entkoppelt von der kontinuierlichen Bandlaufgeschwindigkeit anzutreiben.

9. Vorrichtung nach Anspruch 8,
**dadurch gekennzeichnet,**
**dass** der Antrieb ein Schrittmotor oder ein Servoantrieb ist.

## Claims

1. A method for separating portions of a food composition (3) from a film tubing (1) filled with the food composition, in particular with processed cheese (3), which is guided along a tube conveyor line (9) at a continuous belt operating speed, wherein the film tubing, which is filled with the food composition (2) is first shaped to form a strip having a defined thickness by means of a pair of calibration rollers and to form separate food portions (3), the food composition is then displaced out of the displacement areas (2) running transversely across the film tubing by means of a pair of displacement rollers with displacement webs (26) acting on each other,
**characterized in**
**that** the displacement rollers are driven by means of a drive, whose operation can be controlled and which has a predefined individual rotational characteristic isolated from the belt operating speed.

2. The method according to claim 1,
**characterized in**
**that** the displacement rollers are controlled by means of a computer program that implements a timing with a predetermined rotational characteristic.

3. The method according to claim 1,
**characterized in**
**that** the displacement rollers are controlled in correlation with a sensor signal by means of a computer program, wherein the sensor signal correlates with a pattern that is discernible on the film tubing.

4. The method according to claim 3,
**characterized by**
the following process steps:
detecting a predefined part (5) of a pattern provided on the film tubing (1), in particular a repeating mark by means of a sensor (6),
operating the displacement rollers (8) as a function of detection of the defined part (5) of the pattern, so that the food composition (2) is displaced out of the film tubing (1) at a predetermined distance from the defined part (5) of the pattern in a displacement area.

5. The method according to the preceding claim,
**characterized in**
**that** on the basis of the position (x') of the defined part (5) along the tube conveyor line (9) and on the basis of the point in time (t') of detection of the mark (5), a displacement point in time (t'') at which the displacement rollers (8) are brought into displacing contact with the tube (1) with their displacing webs is determined.

6. The method according to any one of the preceding claims,
**characterized in**
**that** a transverse sealing seam (10) is created in the displacement area (2) after the food composition (3) has been displaced out of the displacement area (2).

7. The method according to any one of the preceding claims,
**characterized in**
**that** a contour section (15) on a longitudinal edge (17) of a film which forms the film tubing (1) is synchronized at least indirectly to the displacement rollers (7) and/or to the transverse sealing rollers to form tear strips (16) on the finished package.

8. A device for separating portions of a food (3) from a film tubing (1) filled with a food composition, in particular with processed cheese (3) conveyed along a tube conveyor line (9) at a continuous belt operating speed, wherein to form separate food portions, displacement rollers (7) are present for displacing the food composition (3) out of a displacement area (2),
**characterized in**
**that** a drive which has a predefined individual rotational characteristic and whose operation can be controlled is provided to drive the displacement rollers in isolation from the continuous belt operating speed.

9. The device according to claim 8,
**characterized in**
**that** the drive is a stepping motor or a servo drive.

## Revendications

1. Procédé destiné à séparer des portions d'une masse (3) de produit alimentaire à partir d'un film tubulaire (1) ramené le long d'un trajet de convoyage (9) de tubes avec une vitesse continue de fonctionnement de la bande et rempli de la masse de produit alimentaire, notamment de fromage fondu (3), le film tubulaire rempli de la masse (2) de produit alimentaire étant d'abord façonné au moyen d'une paire de cylindres de calibrage en une bande d'une épaisseur définie et pour créer des portions (3) de produit alimentaire séparées, au moyen d'une paire de cylindres de refoulement avec des traverses de refoulement (26) agissant l'une sur l'autre, la masse de produit alimentaire étant ensuite refoulée hors de zones de refoulement (2) s'étendant à la transversale au-dessus du film tubulaire,
**caractérisé en ce**
**que** les cylindres de refoulement sont entraînés au moyen d'un entraînement pouvant être commandé dans son fonctionnement avec une caractéristique de rotation individuelle prédéfinie, en étant découplés de la vitesse de fonctionnement de la bande.

2. Procédé selon la revendication 1,
**caractérisé en ce**
**que** les cylindres de refoulement sont actionnés au moyen d'un programme informatique avec caractéristique de rotation prédéfinissable, réalisant un cadencement temporel.

3. Procédé selon la revendication 1,
**caractérisé en ce**
**que** les cylindres de refoulement sont actionnés au moyen d'un programme informatique, en corrélation avec un signal de capteur, le signal de capteur étant en corrélation avec un motif identifiable sur le film tubulaire.

4. Procédé selon la revendication 3,
**caractérisé par**
les étapes de procédé suivantes :
identifier une partie (5) définie d'un motif prévu sur le film tubulaire (1), notamment une marque de rapport, au moyen d'un capteur (6),
faire fonctionner les cylindres de refoulement (8) en fonction de l'identification de la partie (5) définie du motif, de sorte que la masse (2) de produit alimentaire soit refoulée hors du film tubulaire (1) avec un écart prédéfini par rapport à la partie (5) définie du motif, dans une zone de refoulement.

5. Procédé selon la revendication précédente,
**caractérisé en ce**
**qu'**à l'aide de la position (x') de la partie (5) définie le long du trajet de convoyage (9) de tubes et à l'aide de l'instant (t') de l'identification du marquage (5), il est déterminé un instant de refoulement (t'') auquel les cylindres de refoulement (8) sont amenés par leurs traverses de refoulement en contact de refoulement avec le tube (1).

6. Procédé selon l'une quelconque des revendications précédentes,
**caractérisé en ce**
**que** dans la zone de refoulement (2) il est créé une soudure (10) de scellage transversal, après que la masse (3) de produit alimentaire ait été refoulée hors de la zone de refoulement (2).

7. Procédé selon l'une quelconque des revendications précédentes,
**caractérisé en ce**
**que** pour former des pattes de d'ouverture (16) sur l'emballage fermé, une coupe de contour (15) sur une arête longitudinale (17) d'un film formant le film tubulaire (1) est synchronisée au moins indirectement sur les cylindres de refoulement (7) et/ou sur les cylindres de scellage transversal.

8. Dispositif destiné à séparer des portions d'un produit alimentaire (3) à partir d'un film tubulaire (1) ramené le long d'un trajet de convoyage (9) de tubes avec une vitesse continue de fonctionnement de la bande et rempli d'une masse de produit alimentaire, notamment de fromage fondu (3), pour former des portions séparées de produit alimentaire, des cylindres de refoulement (7) étant présents pour refouler la masse (3) de produit alimentaire hors d'une zone de refoulement (2)
**caractérisé en ce**
**qu'**il est prévu un entrainement pouvant être commandé dans son fonctionnement avec une caractéristique de rotation individuelle prédéfinie, pour entraîner les cylindres de refoulement découplés de la vitesse de fonctionnement continue de la bande.

9. Dispositif selon la revendication 8,
**caractérisé en ce**
**que** l'entraînement est un moteur pas à pas ou un servomoteur.
